# EUROPÄISCHE PATENTSCHRIFT

(11) **EP 1 451 531 B1**
(45) Veröffentlichungstag und Bekanntmachung des Hinweises auf die Patenterteilung: **24.08.2011**
(21) Anmeldenummer: 02805251.2
(22) Anmeldetag: 02.12.2002
(51) Int. Cl.: G01D 11/24, G01K 1/08

(54) **FÜHLER, VIELZAHL VON FÜHLERN UND VERFAHREN ZUR HERSTELLUNG DES FÜHLERS**
SENSOR, PLURALITY OF SENSORS AND A METHOD FOR PRODUCING SAID SENSOR
SONDE, PLURALITE DE SONDES ET PROCEDE DE FABRICATION DE LADITE SONDE

(30) Priorität: 06.12.2001 DE 10159871
(43) Veröffentlichungstag der Anmeldung: 01.09.2004
(73) Patentinhaber: EPCOS AG, 81669 München (DE)
(72) Erfinder: GRUNDMANN, Wolfgang, 16547 Birkenwerder (DE)
(74) Vertreter: Epping - Hermann - Fischer
(86) Internationale Anmeldenummer: PCT/DE2002/004402
(87) Internationale Veröffentlichungsnummer: WO 2003/054484

(56) Entgegenhaltungen:
- GB-A- 1 461 574

## Beschreibung

Die Erfindung betrifft einen Fühler mit einem Fühlerkörper, an dessen Kopfseite in einem Loch ein Sensorelement angeordnet ist. Die DE 19534887 A1 beschreibt einen solchen Fühler körper. An der Fußseite des Fühlerörpers der vorliegenden Erfindung ist ein Flansch angeordnet. Ferner betrifft die Erfindung eine Vielzahl von Fühlern. Darüber hinaus betrifft die Erfindung ein Verfahren zur Herstellung eines Fühlers.

Es sind Fühler der eingangs genannten Art bekannt, bei denen der Flansch an der Fußseite des Fühlerkörpers so dünn ausgeführt ist, daß er in das Loch an der Kopfseite eines zweiten Fühlers hineingesteckt werden kann. Diese Fühler haben den Nachteil, daß es bei einer Vielzahl von Fühlern, wo die Fühler ungeordnet in einem Behälter vorliegen, passieren kann, daß der Flansch eines Fühlers in das kopfseitige Loch eines weiteren Fühlers eingedrückt wird. Dadurch kann unter Umständen das im kopfseitigen Loch des anderen Fühlers befindliche Sensorelement beschädigt werden.

Die vorliegende Erfindung löst die Aufgabe, einen Fühler anzugeben, der in einer Vielzahl in Unordnung vorliegen kann, ohne daß die Gefahr besteht, daß der Flansch des Fühlers in das kopfseitige Loch eines weiteren Fühlers hineingedrückt wird.

Diese Aufgabe wird gelöst durch einen Fühler nach Patentanspruch 1. Vorteilhafte Ausgestaltungen des Fühlers, eine Vielzahl von Fühlern sowie ein Verfahren zur Herstellung des Fühlers sind den weiteren Ansprüchen zu entnehmen.

Es wird ein Fühler angegeben, der einen Fühlerkörper aufweist. Der Fühlerkörper kann langgestreckt sein. An der Kopfseite des Fühlerkörpers ist ein Loch vorgesehen, in dem ein Sensorelement angeordnet ist. Das Sensorelement kann beispielsweise ein NTC-Temperatursensor sein. An der Fußseite des Fühlerkörpers ist ein Fußteil angeordnet. Das Fußteil weist einen Flansch auf. Zudem weist das Fußteil ein am Flansch angeordnetes Schutzelement auf. Die Dicke des Plansches ist kleiner als die Breite des Lochs an der Kopfseite. Die Dicke des Fußteils ist größer als die Breite des Lochs an der Kopfseite.

Der Fühler hat den Vorteil, daß aufgrund des Fußteils, das dicker ist als die Breite des Lochs an der Kopfseite und das den Flansch enthält, ein Hineinstecken des Flansches in das Loch an der Kopfseite eines weiteren Fühlers verhindert wird. Um nämlich den Flansch, der Teil des Fußteils ist, in das Loch eines anderen Fühlers einzuschieben, müßte das gesamte Fußteil des Fühlers in das Loch eingeschoben werden. Da die Dicke des Fußteils größer ist als die Breite des Lochs, ist dies nicht ohne weiteres möglich.

Es wird darüber hinaus ein Fühler angegeben, bei dem das Schutzelement ein vom äußeren Bereich des Flansches zum Fühlerkörper hin verlaufender Bügel ist, der ein Loch im Fußteil begrenzt.

Ein solches Schutzelement kann leicht und preiswert, beispielsweise durch Spritzguß, hergestellt werden. Dadurch, daß das Fußteil wegen des von dem Bügel begrenzten Lochs nicht massiv ist, kann ferner Material und damit Gewicht für den Fühler eingespart werden.

Der Fühler kann in einer vorteilhaften Ausführungsform durch Spritzen eines Kunststoffs in eine Spritzgußform hergestellt sein. Dieses Herstellungsverfahren ist besonders preiswert und ermöglicht die Herstellung großer Stückzahlen mit relativ geringem Aufwand.

Es wird desweiteren ein Fühler angegeben, bei dem das Loch im Fühlerkörper und das Loch im Fußteil von derselben Seite des Fühlerkörpers aus nach innen verlaufen.

Ein solcher Fühler hat .den Vorteil, daß bei der Fertigung mittels Spritzgußverfahren die Löcher durch in einem Teil der Spritzgußform innen integrierte Vorsprünge geformt werden können. Auf die Verwendung von Schiebern kann verzichtet werden. Durch diese vorteilhafte Formgestaltung wird die Herstellung des Fühlers durch Spritzguß vereinfacht.

Es können desweiteren seitlich am Fühlerkörper Rastarme vorgesehen sein, wobei zwischen jedem Rastarm und dem Fühlerkörper ein Freiraum vorgesehen ist, der ein Zurückfedern der Rastarme erlaubt. Die Rastarme können in einer vorteilhaften Ausführungsform federnd ausgebildet sein und somit zum Verrasten des Fühlers mit der Kante eines Gehäuses dienen. Die Freiräume verlaufen dabei von derselben Seite des Fühlerkörpers wie das Loch nach innen.

Auch dadurch ergibt sich wieder der Vorteil der einfachen Fertigung eines solchen Fühlers durch Spritzguß unter Verzicht auf während des Spritzvorgangs einzuschiebende Schieber.

Es wird ferner ein Fühler angegeben, bei dem das Sensorelement durch Anschlußdrähte in dem Loch an der Kopfseite des Fühlerkörpers gehalten ist. Eine solche einfache Fixierung, die mechanisch nicht besonders stabil zu sein braucht und die auch die Verwendung von relativ dünnen Anschlußdrähten erlaubt, wird ermöglicht durch das Fußteil des Fühlers, das ein Eindringen des für sich alleine stehenden Flansches in das Loch verhindert, womit auch eine Beschädigung durch Wegdrükken oder Abreißen des Sensorelements verhindert wird.

Es wird darüber hinaus eine Vielzahl von Fühlern angegeben, die in Unordnung vorliegen. Eine solche Vielzahl von Fühlern kann problemlos in Unordnung gelagert werden, da die Gefahr der Beschädigung des Sensorelementes durch das dicke Fußteil vermindert ist.

Es wird darüber hinaus ein Verfahren zur Herstellung eines Fühlers angegeben, wobei der Fühler durch Spritzgießen eines Kunststoffs in eine aus zwei Hälften gebildete Form hergestellt wird. Das Loch an der Kopfseite des Fühlerkörpers sowie das Loch im Fußteil des Fühlers werden gebildet durch in einer der beiden Hälften der Spritzgußform fest integrierte Vorsprünge. Diese Vorsprünge tauchen in den spritzgegossenen Kunststoff ein und bilden so die Löcher.

Im folgenden wird die Erfindung anhand von Ausführungsbeispielen und den dazugehörigen Figuren näher erläutert.
- Figur 1: zeigt einen beispielhaften Fühler in einer ersten Seitenansicht.
- Figur 2: zeigt zwei beispielhafte Fühler, die nebeneinander liegen in einer Seitenansicht.
- Figur 3: zeigt einen beispielhaften Fühlerkörper und dessen Herstellung durch Spritzgußformen.

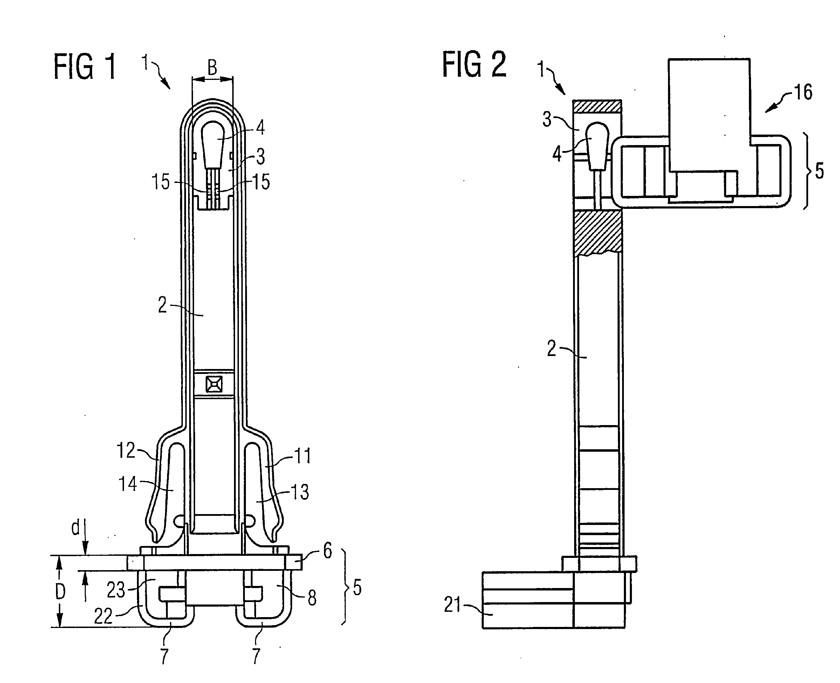

Figur 1 zeigt einen Fühler 1, der einen Fühlerkörper 2 aufweist. An der Kopfseite des Fühlerkörpers 2 ist ein Loch 3 angeordnet. Im Loch 3 ist ein Sensorelement 4 angeordnet. Das Sensorelement 4 wird durch Anschlußdrähte 15 im Loch 3 gehalten. An der Fußseite des Fühlers 1 ist ein Fußteil 5 angeordnet. Das Fußteil 5 umfaßt einen Flansch 6. Der Flansch 6 hat eine Dicke d. Die Dicke d ist kleiner als die Breite B des Lochs 3 am Kopfende des Fühlers 1. Dadurch wäre ohne weitere Maßnahmen die Gefahr gegeben, daß ein weiterer Fühler 16 mit seinem Flansch 6 in das Loch 3 des ersten Fühlers 1 eingeschoben wird und das Sensorelement 4 zur Seite gedrückt oder beschädigt wird (vg1. auch Figur 2). Das Fußteil 5 umfaßt desweiteren Schutzelemente 7, 22, die zu beiden Seiten des Fühlerkörpers 2 am Flansch 6 angeordnet sind. Die Schutzelemente 7, 22 sind in Form von Bügeln ausgeführt, die von den Enden des Flansches 6 zum Fühlerkörper 2 geführt sind. Sie begrenzen dabei Löcher 8, 23 im Fußteil 5. Die Dicke D des Fußteils 5 ist größer als die Breite B des Lochs 3 am Kopfende des Fühlers 1. Dadurch wird verhindert, daß der Flansch 6 eines weiteren Fühlers 16 in Loch 3 des Fühlers 1 hineingedrückt und das Sensorelement 4 beschädigt wird.

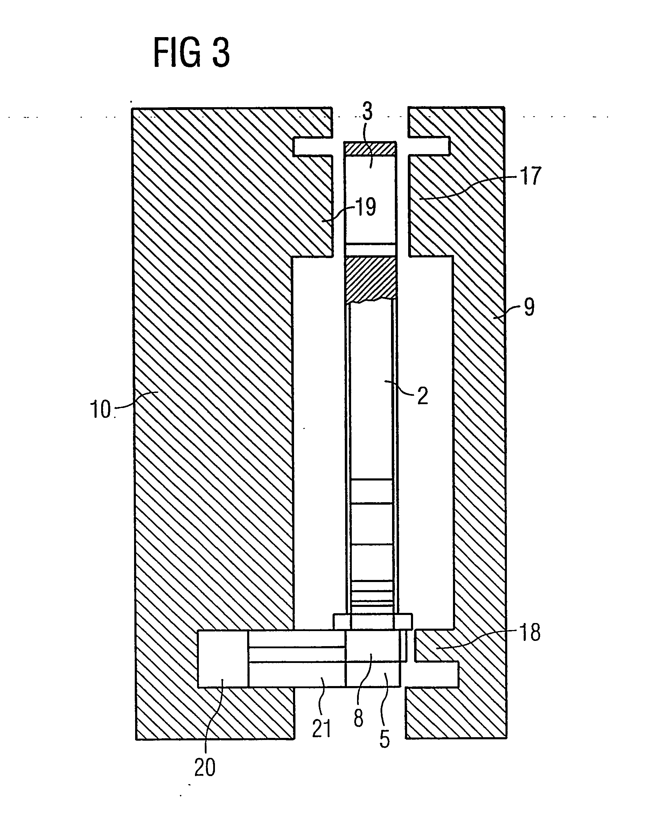

Es sind an den Seiten des Fühlerkörpers 2 Rastelemente 11, 12 angeordnet, die federnd ausgeführt sind. Zwischen den Rastelementen 11, 12 und im Fühlerkörper 2 sind Freiräume 13, 14 angeordnet, die ein Zurückfedern der Rastelemente 11, 12 erlauben. Das Loch 3 an der Kopfseite des Fühlers 1, die Freiräume 13, 14 an den Rastelementen 11, 12 sowie die Löcher 8, die von den Schutzelementen 7 begrenzt sind, verlaufen alle von derselben Seite des Fühlerkörpers 2 aus nach innen. Dadurch können sie relativ leicht durch Spritzguß gefertigt werden (vgl. auch Figur 3). Der Fühlerkörper 2 kann vorzugsweise aus PVC, Polypropylen oder auch aus Polyamid bestehen.

Es ist in Figur 2 darüber hinaus noch ein Stecker 21 gezeigt, der an der Fußseite des Fühlers 1 angeordnet ist. Der Stecker 21 ist mittels der Anschlußdrähte 15 mit dem Sensorelement 4 elektrisch leitend verbunden. Desweiteren ist in Figur 2 ein zweiter Fühler 16 dargestellt, dessen Fußteil 5 am Loch 3 des ersten Fühlers 1 anliegt. Aufgrund der geometrischen Verhältnisse kann weder das Fußteil 5 des weiteren Fühlers 16 noch das im Fußteil 5 des weiteren Fühlers 16 enthaltene Flansch in das Loch 3 des ersten Fühlers eindringen, wodurch das Sensorelement 4 des ersten Fühlers 1 wirksam geschützt ist.

Figur 3 zeigt die Herstellung eines Fühlerkörpers 2 mit einem Loch 3 an der Kopfseite des Fühlerkörpers 2 und mit einem Loch 8 im Fußteil 5 des Fühlerkörpers 2. Zur Herstellung werden zwei Spritzgußformen 9, 10 verwendet, die aneinandergelegt werden und einen Hohlraum bilden, der zum Herstellen des Fühlerkörpers 2 durch Einspritzen mit Kunststoff gefüllt wird. Die Spritzgußform 9 weist am Ort des Lochs 3 einen Vorsprung 17 auf, der in die Spritzgußform 9 integriert ist. Darüber hinaus weist die Spritzgußform 9 an der Stelle des Lochs 8 einen weiteren Vorsprung 18 auf, der zur Formung des Loches 8 vorgesehen ist. Die Spritzgußform 10 weist ebenfalls am Ort des Loches 3 einen weiteren Vorsprung 19 auf, der zur Bildung des Loches 3 vorgesehen ist. Die Spritzgußform 10 weist darüber hinaus eine Vertiefung 20 auf, die zur Bildung des Steckers 21 vorgesehen ist. Die beiden Spritzgußformen 9, 10 werden zusammengeschoben und bilden dadurch den zur Formung des Fühlerkörpers 2 notwendigen Hohlraum.

Die Vorsprünge 17, 19 können auch in lediglich einer der Spritzgußformen angeordnet sein.

## Patentansprüche

1. Fühler (1, 16)
- mit einem Fühlerkörper (2),
- der an seiner Kopfseite ein Loch (3) aufweist, in dem ein Sensorelement (4) angeordnet ist,
- an dessen Fußseite ein Fußteil (5) angeordnet ist, das einen Flansch (6) und ein am Flansch (6) angeordnetes Schutzelement (7) aufweist,
- bei dem die Dicke des Flansches (d) kleiner ist als die Breite (B) des Loches (3),
- und bei dem die Dicke (D) des Fußteils (5) größer ist als die Breite (B) des Lochs (3).

2. Fühler nach Anspruch 1,
bei dem das Schutzelement (7) ein vom äußeren Bereich des Flansches (6) zum Fühlerkörper (2) hin verlaufender Bügel ist, der ein Loch (8) im Fußteil (5) begrenzt.

3. Fühler nach einem der Ansprüche 1 oder 2,
bei dem auf der dem Schutzelement (7) gegenüberliegenden Seite des Fühlerkörpers (2) ein weiteres Schutzelement (22) angeordnet ist.

4. Fühler nach einem der Ansprüche 1 bis 3,
der durch Spritzen eines Kunststoffs in eine Spritzgußform (9, 10) hergestellt ist.

5. Fühler nach einem der Ansprüche 2 bis 4,
bei dem das Loch (3) im Fühlerkörper (2) und das Loch (8) im Fußteil (5) von derselben Seite des Fühlerkörpers (2) aus nach innen verlaufen.

6. Fühler nach einem der Ansprüche 1 bis 5,
- bei dem seitlich am Fühlerkörper (2) Rastarme (11, 12) vorgesehen sind,
- bei dem zwischen dem Fühlerkörper (2) und den Rastarmen (11, 12) je ein Freiraum (13, 14) vorgesehen ist, und
- bei dem die Freiräume (13, 14) von derselben Seite des Fühlerkörpers (2) wie das Loch (3) nach innen verlaufen.

7. Fühler nach einem der Ansprüche 1 bis 6,
bei dem das Sensorelement (4) durch Anschlußdrähte (15) im Loch (3) gehalten ist.

8. Vielzahl von Fühlern (1, 16) nach einem der Ansprüche 1 bis 7, die in Unordnung vorliegen.

9. Verfahren zur Herstellung eines Fühlers nach einem der Ansprüche 1 bis 7,
wobei der Fühler (1, 16) durch Spritzgießen eines Kunststoffs in eine Spritzgußform (9, 10) hergestellt wird und wobei das Loch (3) an der Kopfseite des Fühlerkörpers (2) und das Loch (8, 23) im Fußteil (5) durch in die Spritzgußform (9, 10) integrierte Vorsprünge (17, 18) gebildet wird.

## Claims

1. Sensor (1, 16)
- with a sensor body (2),
- which has at its head end a hole (3), in which a sensor element (4) is arranged,
- at the foot end of which a foot part (5) is arranged, comprising a flange (6) and a protective element (7) arranged at the flange (6),
- in which the thickness of the flange (d) is less than the width (B) of the hole (3),
- and in which the thickness (D) of the foot part (5) is greater than the width (B) of the hole (3).

2. Sensor according to Claim 1, in which the protective element (7) is a curved bar which extends from the outer region of the flange (6) to the sensor body (2) and delimits a hole (8) in the foot part (5).

3. Sensor according to either of Claims 1 and 2, in which a further protective element (22) is arranged on the side of the sensor body (2) opposite from the protective element (7).

4. Sensor according to one of Claims 1 to 3, which is produced by injecting a polymer into an injection mould (9, 10).

5. Sensor according to one of Claims 2 to 4, in which the hole (3) in the sensor body (2) and the hole (8) in the foot part (5) extend inwards from the same side of the sensor body (2).

6. Sensor according to one of Claims 1 to 5,
- in which engaging arms (11, 12) are provided laterally on the sensor body (2),
- in which a clearance (13, 14) is respectively provided between the sensor body (2) and the engaging arms (11, 12), and
- in which the clearances (13, 14) extend inwards from the same side of the sensor body (2) as the hole (3).

7. Sensor according to one of Claims 1 to 6, in which the sensor element (4) is held in the hole (3) by connection wires (15).

8. Plurality of sensors (1, 16) according to one of Claims 1 to 7 in a disordered state.

9. Method for producing a sensor according to one of Claims 1 to 7, the sensor (1, 16) being produced by injection moulding a polymer in an injection mould (9, 10) and the hole (3) at the head end of the sensor body (2) and the hole (8, 23) in the foot part (5) being formed by projections (17, 18) integrated in the injection mould (9, 10).

## Revendications

1. Sonde (1, 16)
- comprenant un corps de sonde (2),
- qui présente du côté de sa tête un trou (3) dans lequel est disposé un élément de détection (4),
- du côté de la base de laquelle est disposée une pièce de base (5) qui présente une bride (6) et un élément protecteur (7) disposé sur la bride (6),
- dans laquelle l'épaisseur de la bride (d) est inférieure à la largeur (B) du trou (3),
- et dans laquelle l'épaisseur (D) de la pièce de base (5) est supérieure à la largeur (B) du trou (3).

2. Sonde selon la revendication 1,
dans laquelle l'élément protecteur (7) est un étrier qui s'étend depuis la zone extérieure de la bride (6) en direction du corps de sonde (2) et qui délimite un trou (8) dans la pièce de base (5).

3. Sonde selon l'une des revendications 1 ou 2, dans laquelle un élément protecteur supplémentaire (22) est disposé sur le côté du corps de sonde (2) à l'opposé de l'élément protecteur (7).

4. Sonde selon l'une des revendications 1 à 3, laquelle est fabriquée par injection d'une matière plastique dans un moule à injection (9, 10).

5. Sonde selon l'une des revendications 2 à 4, dans laquelle le trou (3) dans le corps de sonde (2) et le trou (8) dans la pièce de base (5) s'étendent vers l'intérieur depuis le même côté du corps de sonde (2).

6. Sonde selon l'une des revendications 1 à 5,
- dans laquelle des bras d'enclenchement (11, 12) sont prévus sur le côté du corps de sonde (2),
- dans laquelle un espace libre (13, 14) est à chaque fois prévu entre le corps de sonde (2) et les bras d'enclenchement (11, 12), et
- dans laquelle les espaces libres (13, 14) s'étendent vers l'intérieur depuis le même côté du corps de sonde (2) que le trou (3).

7. Sonde selon l'une des revendications 1 à 6, dans laquelle l'élément de détection (4) est maintenu dans le trou (3) par des fils métalliques de raccordement (15).

8. Pluralité de sondes (1, 16) selon l'une des revendications 1 à 7, lesquelles se trouvent dans le désordre.

9. Procédé de fabrication d'une sonde selon l'une des revendications 1 à 7,
selon lequel la sonde (1, 16) est fabriquée par moulage par injection d'une matière plastique dans un moule à injection (9, 10) et selon lequel le trou (3) du côté de la tête du corps de sonde (2) et le trou (8, 23) dans la pièce de base (5) sont formés par des éléments en saillie (17, 18) intégrés dans le moule à injection (9, 10).
